# FASCICULE DE BREVET EUROPEEN

(11) **EP 3 230 108 B1**
(45) Date de publication et mention de la délivrance du brevet: **20.02.2019**
(21) Numéro de dépôt: 15804490.9
(22) Date de dépôt: 03.12.2015
(51) Int. Cl.: B60K 15/03

(54) **SYSTÈME POUR VÉHICULE AUTOMOBILE**
SYSTEM FÜR EIN KRAFTFAHRZEUG
SYSTEM FOR A MOTOR VEHICLE

(30) Priorité: 09.12.2014 FR 1462126
(43) Date de publication de la demande: 18.10.2017
(73) Titulaire: Plastic Omnium Advanced Innovation and Research, 1120 Bruxelles (BE)
(72) Inventeur: CRIEL, Bjorn, 1750 Sint-Martens-Lennik (BE)
(74) Mandataire: Potdevin, Emmanuel Eric
(86) Numéro de dépôt international: PCT/EP2015/078485
(87) Numéro de publication internationale: WO 2016/091709

(56) Documents cités:
- FR-A- 552 288
- US-A1- 2009 239 436

## Description

L'invention concerne des systèmes pour véhicules automobiles, notamment des réservoirs.

On connait des réservoirs sous haute pression. Le document US 2009/239436 A1 décrit un système pour véhicule automobile comprenant un conteneur présentant une paroi en matière plastique et un composant fixé de manière étanche à la paroi du conteneur.

Par exemple, on connait des réservoirs sous haute pression à gaz (CNG, LPG, hydrogène, azote..) pour véhicules, dont les enceintes sont fabriquées par soufflage ou injection d'une paraison en matière plastique fondue. Généralement, ces enceintes (« liners », en anglais) sont enveloppées par des filaments de matériaux composites noyés dans une résine ou matrice (par exemple thermodure ou thermoplastique). Ainsi, ces types de réservoir sous haute pression offrent une résistance convenable tout en étant plus léger que les réservoirs sous haute pression en métal.

On connait également des réservoirs sous haute pression de type accumulateurs de pression. Ces derniers servent à accumuler de l'énergie sous la forme d'une pression d'un gaz compressé à l'intérieur d'une vessie ou dans une chambre à piston, au sein de l'enceinte. L'énergie est envoyée en temps voulu dans des systèmes extérieurs au réservoir.

Afin de permettre une connexion entre l'intérieur et l'extérieur de l'enceinte d'un réservoir, on met en place des composants métalliques sur l'enceinte, composants dont la fonction est de permettre de connecter des pièces métalliques avec l'enceinte non métallique, tout en assurant une étanchéité optimale.

Les mêmes besoins de connexion et d'étanchéité peuvent aussi apparaître sur les réservoirs à carburant. Dans ce cas, le carburant est contenu directement dans le réservoir (formant enceinte).

Dans la suite de la description, on appellera « conteneur » la partie du réservoir constituée de parois rigides retenant le fluide à l'intérieur du réservoir. Ce conteneur peut être une enceinte, comme dans le cas des réservoirs de gaz décrits ci-dessus, ou la paroi du réservoir, comme dans le cas des réservoirs à carburant.

Ainsi, que ce soit pour des réservoirs à carburant, des réservoirs à hydrogène ou plus généralement à gaz, il s'avère souvent nécessaire de fixer des vannes ou des tubulures sur les conteneurs afin de pouvoir remplir et vidanger les réservoirs. On y fixe également des anneaux de verrouillage à came, qui permettent d'ouvrir ou d'obturer le réservoir.

Cependant, ces éléments sont en général en métal, ou dans un matériau différent de celui du conteneur, de sorte qu'il est difficile de les souder au conteneur en matière plastique tout en assurant l'étanchéité entre ces deux matériaux. On ajoute donc des joints d'étanchéité.

Dans le cas d'accumulateurs de pression, on met en place des inserts métalliques destinés à jouer le rôle d'interface entre l'extérieur du réservoir et une vessie ou une chambre à piston située à l'intérieur de l'enceinte. Des types d'inserts connus sont les soupapes ou les valves. Ils sont fixés à l'enceinte en matière plastique, enceinte qui est formée par soufflage d'une paraison. L'étanchéité est réalisée également par interposition d'un joint entre l'insert et l'enceinte.

Cependant, dans tous les cas, d'une part le joint constitue une pièce supplémentaire qui occasionne une opération de montage spécifique. Il est notamment nécessaire de prévoir un logement pour le joint sur l'insert. D'autre part, un tel agencement engendre des risques de mauvais positionnement ou de déplacement du joint, ce qui peut provoquer un défaut d'étanchéité. Enfin, l'étanchéité est compliquée à maintenir dans le temps car un fluage de la matière plastique peut finir par se produire dans la zone ou le joint est comprimé.

Un but de l'invention est de réaliser un système d'étanchéité qui ne présente pas de risques de fuites.

On prévoit, selon l'invention, un système pour véhicule automobile, comprenant :
- un conteneur comprenant une paroi en matière plastique, et
- un composant fixé de manière étanche à la paroi du conteneur,
système dans lequel le composant comprend au moins une portion munie de microsillons. Les microsillons sont présents à la surface du composant et assurent l'étanchéité entre le composant et la paroi du conteneur.

Ainsi, l'étanchéité entre le composant, généralement métallique, qui est par exemple un insert ou une vanne, et le conteneur en matière plastique, est assurée par les microsillons. Les microsillons sont des stries de petites dimensions, gravées sur le composant. Ce sont des reliefs réguliers. La couche en matière plastique du conteneur pénètre dans les microsillons et évite ainsi les risques de fuites. Cela permet également d'éviter l'utilisation de joints d'étanchéité et donc de ne pas effectuer les opérations inhérentes, coûteuses, au montage d'un tel joint. Enfin, on évite ainsi les inconvénients découlant de l'utilisation d'un joint, tels que le déplacement du joint dû au fluage de la matière plastique.

De préférence, les microsillons présentent au moins l'une des caractéristiques suivantes :
- ils mesurent entre 10 et 100 micromètres de largeur ;
- ils mesurent entre 50 et 200 micromètres de profondeur ;
- chaque microsillon est séparé d'un microsillon voisin par une distance allant de 100 à 1000 micromètres.
- ils présentent une forme en contre dépouille. Concernant la forme en contre dépouille, elle est orientée dans le sens qui permet d'augmenter la tenue mécanique entre la portion du composant munie des microsillons et le conteneur auquel elle est fixée. Ainsi, lors de l'application d'un couple sur le composant, ou lors de l'application d'une force de traction de compression ou de rotation, les microsillons permettent de maintenir la tenue mécanique de l'ensemble.

Avantageusement, les microsillons sont tous parallèles entre eux.

De préférence, il y a au moins deux types de microsillons, les types différant entre eux par exemple par la direction des microsillons.

Avantageusement, la portion munie de microsillons comprend un logement dans lequel est logé un joint. Alternativement, un tel logement peut être positionné au voisinage de la portion munie de microsillons.

Ainsi, on ne supprime pas le joint d'étanchéité par rapport à l'art antérieur, mais on améliore la durabilité de l'étanchéité entre le composant et le conteneur. L'étanchéité pourrait être dégradée dans le temps par exemple par des changements dimensionnels dus à la température ou dus au gonflement du fluide stocké dans le conteneur. Il est donc avantageux de prévoir une stabilité dimensionnelle et de positionnement entre le conteneur et le composant en particulier dans, ou proche de la zone de compression du joint. Dans ce cas, on intègre au moins une zone de microsillons proche de cette zone de compression du joint.

De préférence, un matériau adhésif est situé sur la portion munie de microsillons. Le matériau adhésif utilisé peut être du polymère fonctionnalisé, par exemple du polyéthylène anhydre maléique.

Ainsi, on peut combiner la présence des microsillons et d'un joint et/ou d'un matériau adhésif en vue de renforcer l'étanchéité entre le composant et le conteneur.

Avantageusement, le composant et la portion munie de microsillons forment un ensemble monobloc.

Ainsi, la portion munie de microsillons fait partie intégrante du composant. En d'autres termes, il est impossible de séparer la portion du composant sans détruire au moins la portion ou le composant.

De préférence, le composant et la portion munie de microsillons sont deux pièces assemblées.

Ainsi, on intègre à un composant classique une portion munie de microsillons. Le composant et la portion sont donc deux éléments séparables.

Avantageusement, la portion munie de microsillons comprend du métal.

De préférence, le composant constitue un insert apte à connecter le conteneur à un système extérieur au conteneur.

Ainsi, le composant permet par exemple la connexion entre une vessie, une chambre à piston du conteneur, et l'extérieur du conteneur. Le composant peut également constituer une vanne sur un réservoir à carburant ou à gaz de type CNG ou hydrogène.

Avantageusement, le composant constitue une plaque d'interface entre l'intérieur et l'extérieur du réservoir.

Ainsi, le composant permet par exemple de couvrir un orifice lors de la fabrication du réservoir, orifice par lequel on a fait passer des éléments internes au réservoir. De plus, le composant peut servir d'interface entre le réservoir et l'extérieur, si on veut fixer une pièce extérieure au réservoir.

De préférence, le conteneur est apte à contenir du liquide et/ou du gaz.

On prévoit également un procédé de fabrication d'un ensemble comprenant un conteneur d'un réservoir de véhicule automobile et un composant comprenant au moins une portion munie de microsillons, qui comprend la mise en oeuvre des étapes suivantes :
- extrusion d'une paraison en matière plastique fondue, destinée à devenir le conteneur ;
- mise en contact de la paraison avec la portion du composant ;
- soufflage de la paraison de manière à former le conteneur.

Ainsi, la mise en contact de la paraison en plastique fondu avec la portion permet l'entrée de la paraison dans les microsillons de la portion, lors de la fabrication de l'ensemble. On génère ainsi l'étanchéité entre le futur conteneur et le composant qui est fixé dessus.

De préférence, on effectue les étapes suivantes :
- positionnement au préalable du composant entre deux cavités d'un moule ;
- après l'extrusion, fermeture du moule ;
- lors de la mise en contact, compression de la paraison sur les microsillons générée par la fermeture du moule.

On prévoit également un procédé de fabrication d'un ensemble comprenant un conteneur d'un réservoir de véhicule automobile et un composant comprenant au moins une portion munie de microsillons, qui comprend la mise en oeuvre des étapes suivantes :
- surmoulage de la portion du composant avec une matière apte à être soudée avec une matière constituant le conteneur ;
- positionnement d'une paraison en matière plastique entre deux cavités d'un moule ;
- fermeture du moule engendrant une mise en contact de la paraison avec la portion surmoulée du composant ;
- soudage de la paraison à la portion surmoulée du composant ;
- soufflage de la paraison de manière à former le conteneur.

De préférence, les microsillons de la portion sont obtenus par l'utilisation d'un laser à fibres. Les caractéristiques du faisceau laser permettent d'obtenir des formes optimisées pour une interface entre le métal d'un composant et le plastique d'un conteneur.

Avantageusement, les procédés selon l'invention comprennent ainsi en outre la mise en oeuvre des étapes suivantes :
- au préalable, positionnement d'un composant sans microsillons dans une station comprenant un laser à fibres ;
- gravure des microsillons avec le laser sur une portion du composant ;
- positionnement du composant comprenant la portion munie de microsillons dans une station de soufflage.

On prévoit également un procédé de fabrication d'un ensemble comprenant un conteneur d'un réservoir de véhicule automobile et deux composants comprenant chacun au moins une portion munie de microsillons, dans lequel on met en oeuvre les étapes suivantes :
- positionnement de deux composants sans microsillon dans une station comprenant un laser à fibres ;
- gravure des microsillons avec le laser sur une portion de chaque composant.
- positionnement des deux composants comprenant les portions munies de microsillons dans une station de soufflage ;
- extrusion d'une paraison en matière plastique fondue, destinée à devenir le conteneur ;
- mise en contact de la paraison avec les portions des deux composants ;
- soufflage de la paraison de manière à former le conteneur.

Avantageusement, la mise en contact dans les procédés selon l'invention est effectuée par pression ou compression.

De préférence, la mise en contact dans les procédés selon l'invention est effectuée par soufflage.

Avantageusement, la mise en contact dans les procédés selon l'invention est effectuée par injection.

Alternativement, au lieu d'extruder une paraison, on extrude des feuilles selon le procédé décrit dans la publication EP-1110697-A2.

L'invention sera mieux comprise à la lecture de la description qui va suivre donnée uniquement à titre d'exemple et faite en référence aux dessins dans lesquels :
- la figure 1 illustre une enceinte d'un réservoir en coupe longitudinale médiane ;
- la figure 2 illustre un détail de cette enceinte à grande échelle ;
- les figures 3 à 6 illustrent un procédé de fabrication d'une enceinte ;
- les figures 7 à 11 illustrent des types de microsillons de façon schématique ;
- les figures 12 et 13 illustrent deux types de microsillon en vue transversale ;
- la figure 14 illustre un assemblage selon un mode de réalisation conforme à l'invention ;
- les figures 15 et 16 illustrent un assemblage selon un autre mode de réalisation ; et
- la figure 17 illustre un détail d'une enceinte selon un autre mode de réalisation ;

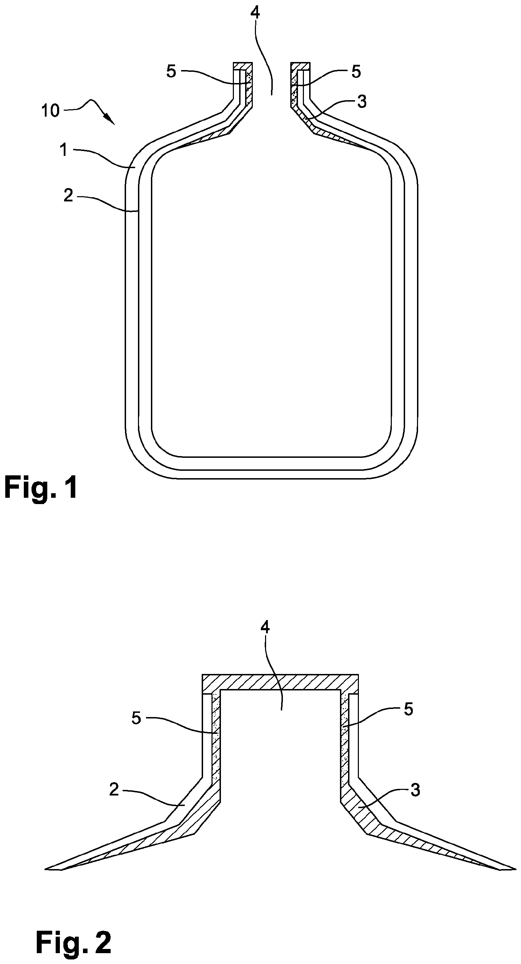

La figure 1 illustre un réservoir 10 de véhicule automobile. Ce réservoir est apte à contenir du liquide sous pression et/ou du gaz sous pression. Il comprend une enceinte 2 en matière thermoplastique, constituant un conteneur au sens de l'invention, ainsi qu'un enroulement de fibres 1 en résine époxy tout autour de l'enceinte 2. Il comprend également une ouverture 4, par lequel il peut être connecté à des composants extérieurs. Par exemple, un réservoir servant en tant qu'accumulateur de pression pourrait être connecté à un conduit de gaz ou d'huile. Un réservoir de carburant, de gaz CNG ou d'hydrogène serait connecté par cette ouverture à des systèmes moteurs. Afin d'assurer la connexion entre l'enceinte 2 et l'extérieur du réservoir 10, on utilise un composant métallique 3. Ce composant peut être un insert, une vanne, ou tout type d'interface apte à effectuer la connexion entre l'intérieur de l'enceinte et l'extérieur de l'enceinte. L'enceinte 2 étant constituée d'une matière plastique, par exemple du PEHD, l'étanchéité est assurée par des microsillons situés dans la zone verticale 5 à la surface de l'insert métallique. La zone 5, qui constitue la portion munie de microsillons selon l'invention, est représentée également schématiquement sur la figure 2, qui illustre une vue à plus grande échelle du réservoir 10 au niveau de l'ouverture 4. Les microsillons sont gravés par laser à fibre préalablement au montage de l'insert au sein de l'enceinte 2.

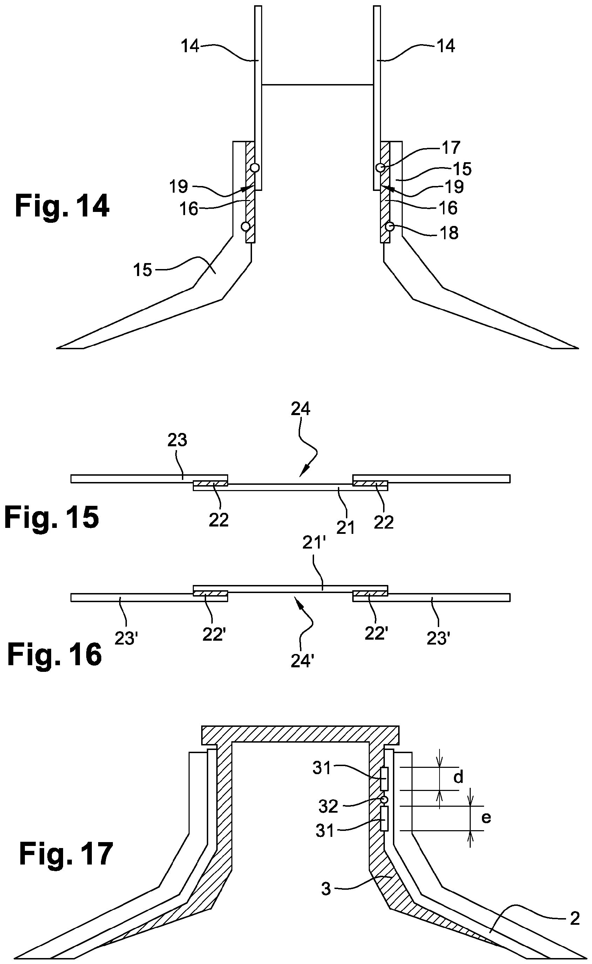

Dans un autre mode de réalisation de l'invention illustré à la figure 17, on met en place un joint d'étanchéité 32 entre le composant 3 et l'enceinte 2. De part et d'autre du joint 32, le composant 3 présente des zones de microsillons 31 s'étendant respectivement sur des distances *d* et *e*. Ces distances peuvent être identiques ou non. Ainsi, on combine l'utilisation de microsillons et d'un joint d'étanchéité de façon à améliorer l'étanchéité. Surtout, les microsillons 31 situés de part et d'autres du joint 32 permettent d'éviter que le joint 32 se déplace, sous l'effet de contraintes telles que le gonflement du fluide stocké dans l'enceinte.

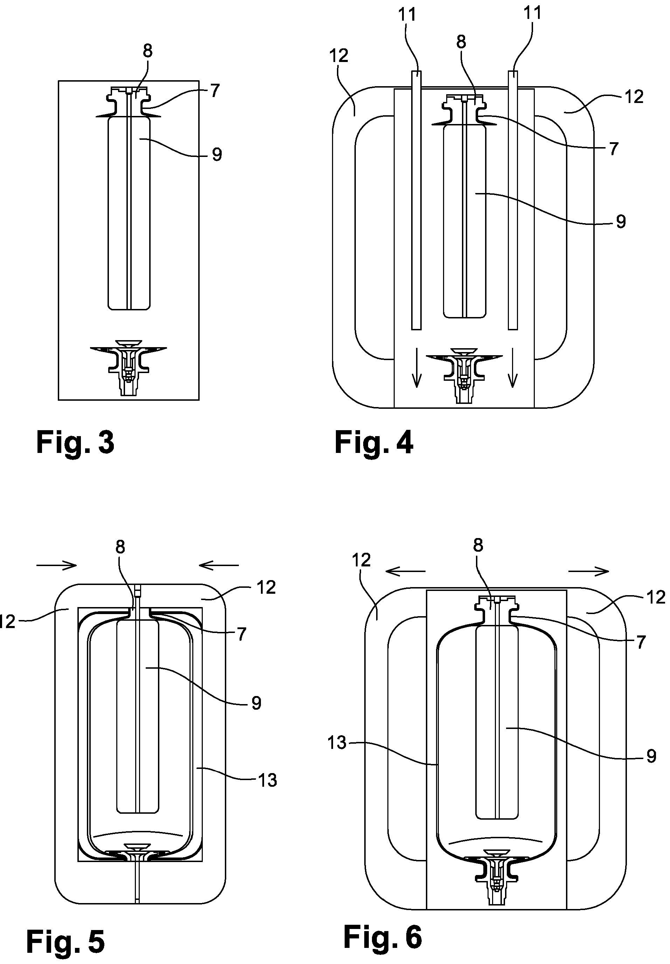

Un réservoir à haute pression pour véhicule peut ainsi être fabriqué de la façon suivante, en référence aux figures 3 à 6 :
- on génère des microsillons 7 à la surface du composant, en l'espèce l'insert métallique 8, grâce à un laser situé dans une station de laser à fibres;
- l'insert est fixé à une vessie 9 ;
- on extrude une paraison 11 ;
- on place la paraison 11 en matière plastique fondue dans un moule 12 ouvert ;
- on ferme le moule 12, comme l'illustre la figure 5, et au moment de la fermeture on met en contact la paraison 11 contre la surface métallique de l'insert 8 de façon à faire pénétrer la matière plastique de la paraison dans au moins certains des microsillons 7 ;
- on souffle la paraison 11 de manière à former l'enceinte 13 ;
- on ouvre le moule 12 de façon à permettre la sortie de l'enceinte comprenant l'insert métallique.

Alternativement, on pourrait également souffler l'enceinte avant la mise en contact la paraison avec la portion de l'insert comprenant les microsillons.

La mise en contact entre les microsillons de l'insert et la paraison en matière plastique fondue peut être réalisée de diverses manières :
- grâce au soufflage de la paraison, qui presse cette dernière contre la portion du composant munie de microsillons ;
- grâce à une pression d'un vérin sur la paraison 11 afin de la faire pénétrer le plus possible dans les microsillons 7 ;
- grâce à une pression d'un vérin sur le composant métallique, en l'espèce un insert 8, afin de pénétrer le plus possible la paraison 11 dans les microsillons 7 de l'insert 8. Un tel vérin peut par exemple être présent sur un noyau situé à l'intérieur du moule. La mise en contact a pour effet de remplir les microsillons avec la matière plastique de l'enceinte.

On pourrait également de cette façon fabriquer une enceinte comprenant deux composants métalliques. Le procédé serait le même si ce n'est que ce qui s'applique à un composant s'appliquerait aux deux composants.

On a pris l'exemple d'un composant métallique, en l'espèce un insert, l'invention peut être mise en oeuvre avec un composant non métallique.

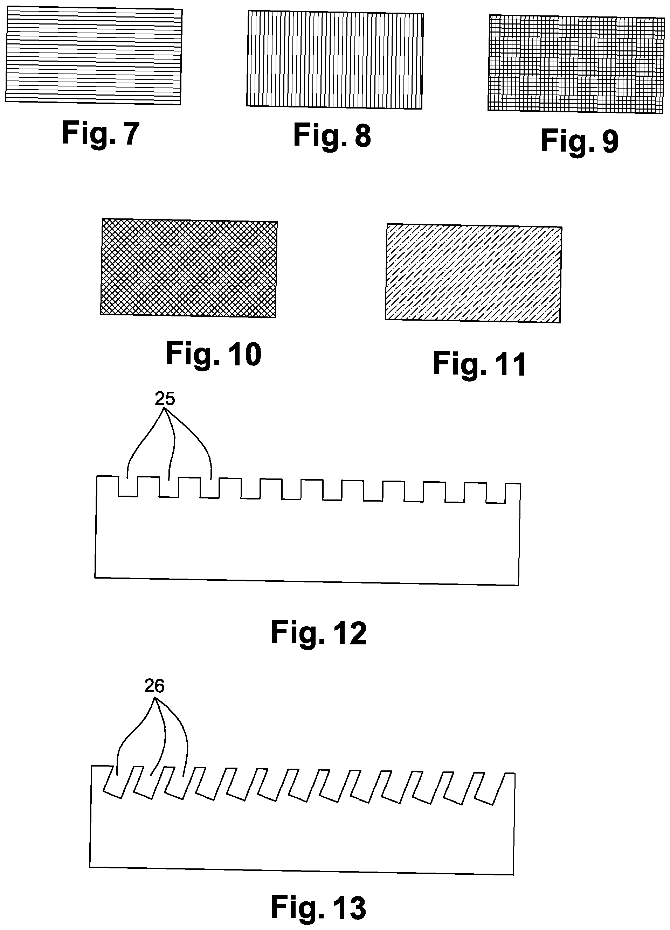

Les microsillons peuvent prendre plusieurs formes, comme illustré schématiquement aux figures 7 à 11. Ils peuvent notamment être parallèles entre eux, où comprendre des directions différentes. Concernant leur forme au sein de la surface du composant, les figures 12 et 13 illustrent deux possibilités à titre non limitatif. Les microsillons 25 peuvent être verticaux, comme illustré à la figure 12, ou légèrement inclinés, comme le sont les microsillons 26 de la figure 13. Ils peuvent également avoir une forme en contre dépouille. Les formes inclinés ou en contre dépouille permettent de maintenir une bonne tenue mécanique entre l'enceinte et le composant présentant les microsillons, notamment lorsque des contraintes sont exercées sur l'enceinte ou le composant.

Dans un autre mode de réalisation de l'invention non illustré, on surmoule au préalable un composant métallique avec une matière plastique apte à être soudé à l'enceinte en matière plastique du réservoir. En effet, le surmoulage permet de souder plus facilement le composant métallique à l'enceinte. Dans ce cas, on génère des microsillons à la surface métallique du composant avant le surmoulage. En effet, les microsillons permettent d'assurer l'étanchéité entre la surface métallique du composant et la matière surmoulée. Le procédé de fabrication d'un réservoir comprenant par exemple un insert surmoulé est le même que le procédé précédent, si ce n'est qu'on surmoule l'insert au préalable, de façon à ce que la matière plastique surmoulant l'insert s'incruste dans au moins certains des microsillons situés sur la surface métallique de l'insert. On soude l'enceinte au surmoulage de l'insert durant le soufflage de l'enceinte.

La figure 14 illustre un assemblage conforme à un autre mode de réalisation de l'invention. L'enceinte 15 du réservoir présente un composant 16 métallique fixé à l'enceinte. Ce composant peut être une tubulure, une vanne, ou tout insert de connexion. Le réservoir peut être par exemple un réservoir de carburant. La connexion entre l'enceinte 15 et l'extérieur du réservoir est effectuée grâce au composant 16. En effet, un conduit extérieur 14 est fixé à l'intérieur du composant 16. Il peut être fixé par tout moyen (clippage, vissage). En plus des microsillons 19 présents à la surface du composant, on met en place des joints 17 et 18 qui permettent de renforcer l'étanchéité. Un joint 17 est ainsi placé entre l'insert 16 et le conduit 14. Un autre joint 18 est placé entre l'insert 16 et l'enceinte 15. Ainsi, on combine les effets des microsillons 19 et des joints 17 et 18 afin d'optimiser l'étanchéité de l'ensemble.

Dans un autre mode de réalisation illustré aux figures 15 et 16, on utilise un composant métallique 21 présentant une portion 22 munie de microsillons en tant qu'obturateur d'un réservoir de carburant 23. En effet, lors de la fabrication du réservoir 23 de carburant, ce dernier comporte un orifice 24 afin de permettre d'y faire entrer des éléments internes au réservoir 23. Une fois le montage de ces éléments terminés, il est nécessaire d'obturer l'orifice 24. On soude donc au réservoir le composant métallique 23 à l'extérieur du réservoir, en faisant entrer en contact avec la paroi du réservoir, qui constitue ici le conteneur au sens de l'invention, les microsillons de la portion 22, de façon à assurer l'étanchéité du réservoir 23. Ce soudage a lieu durant le soufflage du réservoir. Ainsi, la paraison encore molle peut s'enfoncer dans les microsillons de la portion 22 de la pièce métallique 21.

La figure 16 illustre une variante où la pièce métallique est fixée à l'intérieur du réservoir.

On peut fabriquer un réservoir conforme à l'invention en utilisant un procédé de type « TSBM » (« twin-sheet blow-moulding) » décrit dans la publication EP-1110697-A2. Ainsi, à la place de l'extrusion d'une paraison en matière plastique fondue, on extrude deux feuilles de matière plastiques fondues, qui sont pressées l'une sur l'autre.

De même, on peut utiliser des étapes d'injection et de thermoformage afin de former le réservoir.

Comme expliqué précédemment, le composant selon l'invention peut être en métal, mais aussi dans un plastique différent de celui du contenant du réservoir. Il peut également comprendre une combinaison de métal et de plastique.

Bien entendu, on pourra apporter à l'invention de nombreuses modifications sans sortir du cadre de celle-ci.

## Revendications

1. Système pour véhicule automobile comprenant :
- un conteneur (2 ; 13 ; 15) présentant une paroi en matière plastique, et
- un composant (3 ; 8 ; 16) fixé de manière étanche à la paroi du conteneur (2), **caractérisé en ce que** le composant (3) comprend au moins une portion (5 ; 22 ; 31) munie de microsillons, et **en ce que** les microsillons sont présents à la surface du composant et assurent l'étanchéité entre le composant (3) et la paroi du conteneur (2).

2. Système selon la revendication précédente, dans lequel les microsillons présentent au moins l'une des caractéristiques suivantes :
- ils mesurent entre 10 et 100 micromètres de largeur ;
- ils mesurent entre 50 et 200 micromètres de profondeur ;
- chaque microsillon (7 ; 19) est séparé d'un microsillon voisin par une distance allant de 100 à 1000 micromètres.
- ils présentent une forme en contre-dépouille.

3. Système selon l'une quelconque des revendications précédentes, dans lequel la portion (5 ; 22 ; 31) munie de microsillons comprend un logement dans lequel est logé un joint (18 ; 32).

4. Système selon l'une quelconque des revendications précédentes, dans lequel un matériau adhésif est situé sur la portion (5 ; 22 ; 31) munie de microsillons.

5. Système selon l'une quelconque des revendications précédentes, dans lequel le composant (3) et la portion (5 ; 22 ; 31) forment un ensemble monobloc.

6. Système selon l'une quelconque des revendications 1 à 4, dans lequel le composant (3) et la portion (5 ; 22 ; 31) sont deux pièces assemblées.

7. Système selon l'une quelconque des revendications précédentes, dans lequel la portion (5 ; 22 ; 31) comprend du métal.

8. Système selon l'une quelconque des revendications précédentes, dans lequel le conteneur (2) est apte à contenir du liquide et/ou du gaz.

9. Procédé de fabrication d'un ensemble comprenant un conteneur (2 ; 15) d'un réservoir de véhicule automobile et un composant (3 ; 16) comprenant au moins une portion (5 ; 22 ; 31) munie de microsillons, **caractérisé par** la mise en oeuvre des étapes suivantes :
- extrusion d'une paraison (11) en matière plastique fondue, destinée à devenir le conteneur (13) ;
- mise en contact de la paraison (11) avec la portion munie de microsillons (7) du composant, les microsillons étant présents à la surface du composant ;
- soufflage de la paraison (11) de manière à former le conteneur (13) et générer l'étanchéité entre le composant et le conteneur.

10. Procédé de fabrication selon la revendication précédente, dans lequel la mise en contact est effectuée par pression ou compression.

11. Procédé de fabrication selon la revendication précédente, dans lequel la mise en contact est effectuée par soufflage.

12. Procédé de fabrication selon la revendication précédente, dans lequel la mise en contact est effectuée par injection.

## Patentansprüche

1. System für ein Kraftfahrzeug, umfassend:
- einen Behälter (2; 13; 15), der eine Wand aus einem Kunststoffmaterial aufweist, und
- ein Bauteil (3; 8; 16), das dichtend an der Wand des Behälters (2) befestigt ist, **dadurch gekennzeichnet, dass** das Bauteil (3) mindestens einen Abschnitt (5; 22; 31) umfasst, der mit Mikrorillen versehen ist, und dadurch, dass die Mikrorillen auf der Oberfläche des Bauteils vorliegen und die Abdichtung zwischen dem Bauteil (3) und der Wand des Behälters (2) gewährleisten.

2. System nach dem vorangehenden Anspruch, wobei die Mikrorillen mindestens eines der folgenden Merkmale aufweisen:
- sie haben eine Breite zwischen 10 und 100 Mikrometern;
- sie haben eine Tiefe zwischen 50 und 200 Mikrometern;
- jede Mikrorille (7; 19) ist von einer benachbarten Mikrorille um einen Abstand von 100 bis 1000 Mikrometern getrennt,
- sie weisen eine hinterschnittene Form auf.

3. System nach einem der vorangehenden Ansprüche, wobei der mit Mikrorillen versehene Abschnitt (5; 22; 31) ein Gehäuse umfasst, in dem eine Dichtung (18; 32) gelagert ist.

4. System nach einem der vorangehenden Ansprüche, wobei ein Klebmaterial auf dem mit Mikrorillen versehenen Abschnitt (5; 22; 31) angeordnet ist.

5. System nach einem der vorangehenden Ansprüche, wobei das Bauteil (3) und der Abschnitt (5; 22; 31) eine einstückige Anordnung ausbilden.

6. System nach einem der Ansprüche 1 bis 4, wobei das Bauteil (3) und der Abschnitt (5; 22; 31) zwei zusammengesetzte Stücke sind.

7. System nach einem der vorangehenden Ansprüche, wobei der Abschnitt (5; 22; 31) Metall umfasst.

8. System nach einem der vorangehenden Ansprüche, wobei der Behälter (2) dazu geeignet ist, Flüssigkeit und/oder Gas zu enthalten.

9. Verfahren zur Herstellung einer Anordnung, umfassend einen Behälter (2; 15) eines Kraftfahrzeugtanks und ein Bauteil (3; 16), umfassend mindestens einen mit Mikrorillen versehenen Abschnitt (5; 22; 31), **gekennzeichnet durch** das Durchführen der folgenden Schritte:
- Extrudieren eines Vorformlings (11) aus geschmolzenem Kunststoffmaterial, der zu dem Behälter (13) werden soll;
- Inberührungbringen des Vorformlings (11) mit dem mit Mikrorillen (7) versehenen Abschnitt des Bauteils, wobei die Mikrorillen an der Oberfläche des Bauteils vorliegen;
- Blasformen des Vorformlings (11) derart, dass der Behälter (13) ausgebildet wird und die Abdichtung zwischen dem Bauteil und dem Behälter erzeugt wird.

10. Verfahren zur Herstellung nach dem vorangehenden Anspruch, wobei Inberührungbringen durch Druck oder Kompression bewirkt wird.

11. Verfahren zur Herstellung nach dem vorangehenden Anspruch, wobei das Inberührungbringen durch Blasformen bewirkt wird.

12. Verfahren zur Herstellung nach dem vorangehenden Anspruch, wobei das Inberührungbringen durch Einspritzen bewirkt wird.

## Claims

1. System for a motor vehicle comprising:
- a container (2; 13; 15) comprising a plastic wall, and
- a component (3; 8; 16) secured in a sealed manner to the wall of the container (2),
**characterized in that** the component (3) comprises at least one portion (5; 22; 31) provided with microgrooves, and **in that** the microgrooves are present on the surface of the component and ensure sealing between the component (3) and the wall of the container (2).

2. System according to the preceding claim, wherein the microgrooves have at least one of the following features:
- they are between 10 and 100 micrometers wide;
- they are between 50 and 200 micrometers deep;
- each microgroove (7; 19) is separated from a neighboring microgroove by a distance ranging from 100 to 1000 micrometers;
- they have an undercut shape.

3. System according to any of the preceding claims, wherein the portion (5; 22; 31) provided with microgrooves comprises a housing in which a seal (18; 32) is housed.

4. System according to any of the preceding claims, wherein an adhesive material is located on the portion (5; 22; 31) provided with microgrooves.

5. System according to any of the preceding claims, wherein the component (3) and the portion (5; 22; 31) form a one-piece assembly.

6. System according to any of claims 1 to 4, wherein the component (3) and the portion (5; 22; 31) are two assembled parts.

7. System according to any of the preceding claims, wherein the portion (5; 22; 31) comprises metal.

8. System according to any of the preceding claims, wherein the container (2) is capable of containing liquid and/or gas.

9. Method for manufacturing an assembly comprising a container (2; 15) of a motor vehicle tank and a component (3; 16) comprising at least one portion (5; 22; 31) provided with microgrooves, **characterized by** the performance of the following steps:
- extrusion of a molten plastic parison (11), which will become the container (13);
- bringing the parison (11) into contact with the portion provided with microgrooves (7) of the component, the microgrooves being present on the surface of the component;
- blow-molding the parison (11) so as to form the container (13) and create sealing between the component and the container.

10. Manufacturing method according to the preceding claim, wherein the step of bringing into contact is carried out by pressure or compression.

11. Manufacturing method according to the preceding claim, wherein the step of bringing into contact is carried out by blow-molding.

12. Manufacturing method according to the preceding claim, wherein the step of bringing into contact is carried out by injection-molding.
